# EUROPEAN PATENT APPLICATION

(11) **EP 4 506 207 A1**
(43) Date of publication of application: **12.02.2025**
(21) Application number: 23190038.2
(22) Date of filing: 07.08.2023
(51) Int. Cl.: B60L 53/63, B60L 53/64, B60L 53/67

(54) **SYSTEM AND METHOD FOR DYNAMICALLY BALANCING ENERGY DEMANDS OF ELECTRIC VEHICLES IN A MULTI-UNIT DWELLING**

(71) Applicant: Nexxchange.com AG, 1030 Wien (AT)
(72) Inventor: BRIEM, Michael, 9490 Vaduz (LI)
(74) Representative: Global IP Europe Patentanwaltskanzlei

(57) **Abstract**

Embodiments of the present invention disclose a system (100) and a method (600) for dynamically balancing energy demands of electric vehicles (124) using reserve power capacities of multi-unit dwellings (104) connected to an electrical grid (102). A server system (108) calculates a reserve power capacity for a multi-unit dwelling (104) by comparing a total maximum power capacity of the multi-unit dwelling (104) and predicted required power in next predetermined time period of a day. A charge plan is calculated based on the reserve power capacity and consolidated energy demand of the electric vehicles (124), received from respective chargers (122) of a charging station. The server system (108) dynamically adjusts the charge plan in real-time, based on a free power capacity and the consolidated energy demand of the electric vehicles (124), and the power delivered to the electric vehicles (124) is controlled based upon the dynamically adjusted charge plan.

## Description

### TECHNICAL FIELD

The present disclosure relates to electric vehicles and more particularly relates to a system and a method for dynamically balancing the energy demands of electric vehicles using a reserve power capacity of multi-unit dwellings connected to an electrical grid.

### BACKGROUND

The use of fossil fuels for vehicles has drastically reduced in recent years as an effort to address an increase in environmental pollution. Awareness of the use of green energy has resulted in inventions related to electric vehicles. Both uses of fully electric vehicles and plug-in hybrid electric vehicles are increasingly popular nowadays. Since the fully electric and the plug-in hybrid electric vehicles run on electrical power available through an on-board battery pack, a user needs to charge the batteries of the vehicle based on the usage of the vehicle. Many common charging stations with multiple charging points and metering devices are currently available for charging electric vehicles. However, if all private vehicles, for example, cars are replaced with electric vehicles, the electrical energy consumption is estimated to be 116% of the present-day electrical energy consumption.

Nowadays, apartments and houses have their own charging stations. In some places, a centralized charging station can be used by a multi-unit dwelling. Multi-unit dwellings have multiple housing units that are contained in one building or multiple buildings within a complex or a community. Common types of multi-unit dwellings include duplexes, townhomes, apartments, mobile homes, manufactured-home parks, *etc.* Such centralized charging stations can be directly connected to an electrical power grid. The centralized charging station has several chargers and their respective metering devices, for charging the electric vehicles.

The multi-unit dwelling receives power from the electrical power grid based on the capacity allocated by the grid supplier. In case the electrical power requirement exceeds the allocated power, the multi-unit dwelling needs to pay for additional access capacity to the power grid and also for the additionally consumed power. Normally, each apartment and/or house in the multi-unit dwelling has a separate meter to record the power consumption.

In the multi-unit dwelling, allocated power needs to be supplied from the power grid to the apartments, houses, and the centralized charging station. Normally more power is consumed during peak hours, for example, from 06:00 pm to 10:00 pm. If EVs are added to the demand, during peak hours, the consumption may exceed the allocated capacity of the multi-unit dwelling, as all the home appliances including the centralized charging station are operated at near full load. This leads to additional consumption of electricity than the allocated capacity. To avoid cut-off of the grid via built-in protections, it requires an upgrade of the grid capacity of the individual apartment or the multi-dwelling house to offer more throughput, and if all households develop the same consumer patterns it needs extra power plants to provide peak electricity. On the other hand, the off-peak hours will have more of the allocated capacity left without consumption, as only limited home appliances will be running.

Electric battery vehicle owners, in general, plug their vehicles into chargers when they come home, which is between 5:00 pm and 10:00 pm when there is already a peak demand for electricity. The chargers start charging the vehicles immediately to recharge all the connected vehicles. In a scenario where all of the private vehicles are electric vehicles, peak demands in the early evening hours would double, so the power grid would need to offer double throughput, and the power plant parks would have to be 100% larger than today, while spare electrical power capacity during off-peak hours remains under-utilized.

### SUMMARY

To solve the foregoing problem and to provide other advantages, one aspect of the present disclosure is to provide a method for dynamically balancing the energy demands of a plurality of electric vehicles using a reserve power capacity of a multi-unit dwelling connected to an electrical grid. The method includes receiving, by a server system, consolidated power consumption of the multi-unit dwelling from a consolidated dwelling meter of the multi-unit dwelling. The method also includes receiving, by the server system, consolidated energy demand of a plurality of vehicles from a plurality of chargers connected to the plurality of vehicles, respectively. The method also includes calculating, by the server system, the reserve power capacity for the multi-unit dwelling by comparing total maximum power capacity of the multi-unit dwelling and predicted required power in next predetermined time period of a day. The method also includes calculating, by the server system, a charge plan based on the reserve power capacity and the consolidated energy demand of the plurality of vehicles. The method also includes calculating in real-time, by the server system, a free power capacity of the multi-unit dwelling by comparing the total maximum power capacity of the multi-unit dwelling and the consolidated power consumption of the multi-unit dwelling. The method also includes dynamically adjusting, by the server system, in real-time, at least the charge plan based on the free power capacity of the multi-unit dwelling and the consolidated energy demand of the plurality of vehicles. The method also includes controlling, by the server system, power delivered to the plurality of chargers based upon the dynamically adjusted charge plan.

In an aspect, the method also includes setting, by the server system, a start time to start charging the plurality of vehicles based on the charge plan, such that the plurality of vehicles is charged within a first pre-determined time interval during a non-peak energy consumption period.

In an aspect, the method also includes reserving, by the server system, a pre-determined power buffer value in the free power capacity of the multi-unit dwelling. The server system calculates the free power capacity of the multi-unit dwelling by subtracting or excluding the pre-determined power buffer value from the free power capacity of the multi-unit dwelling. The server system dynamically adjusts at least, the charge plan based on the calculated free power capacity.

In an aspect, the method also includes setting, by the server system, a new start time to start charging the plurality of vehicles based on the dynamically adjusted charge plan, such that the plurality of vehicles is charged within a second pre-determined time interval during a non-peak energy consumption period.

In an aspect, the method also includes predicting in real-time, by the server system, power consumption in the next predetermined time period of the multi-unit dwelling based on historical data of the power consumption of the multi-unit dwelling on a same day of a penultimate year. The method also includes calculating in real-time, by the server system, power consumption due to at least one external factor. The predicted required power is calculated by adjusting the predicted energy consumption of the next predetermined time period of the multi-unit dwelling on the same day of the penultimate year with the calculated power consumption in real-time due to at least one external factor.

In an aspect, the method also includes reporting, by the plurality of vehicles, individual energy demands for charging to the plurality of chargers, wherein the consolidated energy demand of the plurality of vehicles is calculated from the individual energy demands. The method also includes reporting, by the plurality of chargers, the consolidated energy demand to the server system and transporting to the plurality of chargers, the charge plan from the server system. The method also includes sending, by the plurality of chargers, the charge plan to the plurality of vehicles. The method also includes sending, by each of the plurality of vehicles, a charge request to the plurality of chargers and charging each of the plurality of vehicles by the plurality of chargers, based on the charge plan and the charge request.

In an aspect, the method also includes reporting, by a consolidated charger meter, to the server system, a charging status of the plurality of vehicles.

In an aspect, the total maximum power capacity of the multi-unit dwelling includes maximum power capacity of the multi-unit dwelling and an additional power capacity received from the electrical grid for fulfilling the consolidated energy demand of the plurality of chargers.

In an aspect, a method for dynamically balancing energy demands of a plurality of electric vehicles using a reserve power capacity of a multi-unit dwelling connected to an electrical grid is provided. The method includes receiving, by an integrated server system, consolidated energy demand of one or more vehicles from a charger including one or more sockets connected to the one or more vehicles. The charger is supplied with electrical power from an electric switchboard for an apartment and the integrated server system is integrated with the charger. The method also includes calculating, by the integrated server system, the reserve power capacity for the apartment by comparing a total maximum power capacity of the apartment and predicted required power for the apartment in the next predetermined time period of a day. The method also includes calculating, by the integrated server system, a charge plan based on the reserve power capacity and the consolidated energy demand of the one or more vehicles. The method also includes calculating in real-time, by the integrated server system, a free power capacity by comparing the total maximum power capacity of the apartment and the consolidated power consumption of the apartment and the charger. The consolidated power consumption is received from an associated apartment meter. The method also includes dynamically adjusting, by the integrated server system, in real-time, at least the charge plan based on the free power capacity and the consolidated energy demand of the one or more vehicles. The method further includes controlling, by the integrated server system, power delivered to the one or more vehicles, based upon the dynamically adjusted charge plan.

In an aspect, a system for dynamically balancing energy demands of a plurality of electric vehicles using a reserve power capacity of a multi-unit dwelling connected to an electrical grid is provided. The system has a consolidated dwelling meter configured to measure a consolidated power consumption of the multi-unit dwelling. The system also has a plurality of chargers and a consolidated charger meter configured to measure the consolidated power consumption of the plurality of chargers. The plurality of chargers is configured to be connected to a plurality of vehicles configured to receive power therefrom, respectively. The system also has a server system connected to the consolidated dwelling meter and the consolidated charger meter. The server system is configured, at least in part, to receive the consolidated power consumption of the multi-unit dwelling from the consolidated dwelling meter. The server system is further configured, at least in part, to receive consolidated energy demand of the plurality of vehicles from the plurality of chargers. The server system is further configured, at least in part, to calculate the reserve power capacity for the multi-unit dwelling by comparing the total maximum power capacity of the multi-unit dwelling and predicted required power in next predetermined time period of a day. The server system is further configured, at least in part, to calculate a charge plan based on the reserve power capacity and the consolidated energy demand of the plurality of vehicles. The server system is further configured, at least in part, to calculate in real-time free power capacity of the multi-unit dwelling by comparing the total maximum power capacity of the multi-unit dwelling and the consolidated power consumption of the multi-unit dwelling. The server system is further configured, at least in part, to dynamically adjust, in real-time, at least the charge plan based on the free power capacity of the multi-unit dwelling and the consolidated energy demand of the plurality of vehicles. The server system is further configured, at least in part, to control power delivered to the plurality of chargers based on the dynamically adjusted charge plan.

In an aspect the server system is further configured, at least in part, to set a start time to start charging of the plurality of vehicles based on the charge plan, such that the plurality of vehicles is charged within a first pre-determined time interval during a non-peak energy consumption period.

In an aspect the server system is further configured, at least in part, to reserve a pre-determined power buffer value in the free power capacity of the multi-unit dwelling and calculate the free power capacity of the multi-unit dwelling by subtracting or excluding the pre-determined power buffer value from the free power capacity of the multi-unit dwelling. The server system dynamically adjusts at least, the charge plan based on the calculated free power capacity.

In an aspect, the server system is further configured, at least in part, to set a new start time to start charging of the plurality of vehicles based on the dynamically adjusted charge plan, such that the plurality of vehicles is charged within a second pre-determined time interval during a non-peak energy consumption period.

In an aspect, the server system is further configured, at least in part, to predict in real-time power consumption in the next predetermined time period of the multi-unit dwelling based on historical data of the power consumption of the multi-unit dwelling on a same day of a penultimate year. The server system is further configured, at least in part, to calculate the power consumption due to at least one external factor. The server system is further configured to calculate the predicted required power by adjusting the predicted energy consumption of the next predetermined time period of the multi-unit dwelling on the same day of the penultimate year with the calculated power consumption in real-time due to at least one external factor.

In yet another aspect, a system for dynamically balancing energy demands of a plurality of electric vehicles using a reserve power capacity of a multi-unit dwelling connected to an electrical grid is provided. The system has a charger electrically connected to an electric switchboard for an apartment for drawing electrical power from the electric switchboard. The charger includes one or more sockets. One or more electric vehicles are connected to the one or more sockets. An integrated server system is integrated with the charger. The integrated server system is configured to receive the consolidated energy demand of the one or more vehicles from the charger. The integrated server system is further configured to calculate the reserve power capacity for the apartment by comparing a total maximum power capacity of the apartment and predicted required power for the apartment in next predetermined time period of a day. The integrated server system is further configured to calculate a charge plan based on the reserve power capacity and the consolidated energy demand of the one or more vehicles. The integrated server system is further configured to calculate, in real-time, a free power capacity by comparing the total maximum power capacity of the apartment and the consolidated power consumption of the apartment and the charger. The consolidated power consumption is received from an associated apartment meter. The integrated server system is further configured to dynamically adjust, in real-time, at least the charge plan based on the free power capacity and the consolidated energy demand of the one or more vehicles. The integrated server system is further configured to control power delivered to the one or more vehicles, based upon the dynamically adjusted charge plan.

An advantage of various embodiments of the present disclosure is to efficiently utilize the allocated energy from the electrical grid for charging the electric vehicles during non-peak hours of the day, for example, from 10:00 pm to 06:00 am, based on the real-time energy consumption of the multi-unit dwelling. The charging plan is created by the server system in real-time and is updated periodically based on the actual consumption of energy in the multi-unit dwelling and the demand for electrical vehicles. The electric vehicles may start charging as late as possible after 10:00 pm, so that the electric vehicles are charged before 06:00 am the next day, based on the charge plan.

### BRIEF DESCRIPTION OF THE FIGURES

The following detailed description of illustrative embodiments is better understood when read in conjunction with the appended drawings. To illustrate the present disclosure, exemplary constructions of the disclosure are shown in the drawings. However, the present disclosure is not limited to a specific device, or a tool and instrumentalities disclosed herein. Moreover, those in the art will understand that the drawings are not to scale.
**FIG. 1** illustrates a schematic diagram of a system for dynamically balancing the energy demand of electric vehicles using reserve energy capacity of a multi-unit dwelling connected to an electrical grid, in accordance with an embodiment of the present disclosure;
**FIG. 2** illustrates a schematic diagram illustrates a data exchange network between several elements of the system of **FIG. 1****,** in accordance with an embodiment of the present disclosure;
**FIG. 3** illustrates a schematic diagram of a centralized charging station used for charging a plurality of electric vehicles, in accordance with an embodiment of the present disclosure;
**FIG. 4** illustrates a block diagram of a server system of the system of **FIG. 1****,** in accordance with an embodiment of the present disclosure;
**FIG. 5** illustrates a schematic diagram of a system for dynamically balancing the energy demand of electric vehicles using spare reserve energy capacity of an apartment connected to an electrical grid, in accordance with another embodiment of the present disclosure;
**FIG. 6** illustrates a flow chart of a method for dynamically balancing the energy demand of electric vehicles using the reserve energy capacity of a multi-unit dwelling connected to the electrical grid, in accordance with an embodiment of the present disclosure;
**FIG. 7** illustrates a flow chart of a method for calculating the predicted required power of a multi-unit dwelling, in accordance with an embodiment of the present disclosure;
**FIG. 8A** illustrates a flow chart of a method deployed by a charger for obtaining a charge plan from the server system and disseminating electrical energy to the electric vehicles as per the obtained charge plan, in accordance with an embodiment of the present disclosure;
**FIG. 8B** illustrates a flow chart of a method deployed by the plurality of electric vehicles to report individual energy demands and request electrical energy, in accordance with an embodiment of the present disclosure; and
**FIG. 9** illustrates a flow chart of a method for dynamically balancing the energy demand of electric vehicles using reserve energy capacity of an apartment in a multi-unit dwelling connected to the electrical grid, in accordance with an embodiment of the present disclosure.

The drawings referred to in this description are not to be understood as being drawn to scale except if specifically noted, and such drawings are only exemplary in nature.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

### OVERVIEW

Various examples of the present disclosure provide a system and a method for dynamically balancing energy demands of electric vehicles using a reserve power capacity of multi-unit dwellings connected to an electrical grid. The system has a server system that calculates the reserve power capacity for a multi-unit dwelling by comparing a total maximum power capacity of the multi-unit dwelling and predicted required power of the multi-unit dwelling in next predetermined time period of a day. A charge plan is calculated based on the reserve power capacity and consolidated energy demand of electric vehicles received from respective chargers of a charging station. The server system also dynamically calculates a free power capacity of the multi-unit dwelling, and in real-time, the charge plan is dynamically adjusted based on the free power capacity and an instantaneous consolidated energy demand of the electric vehicles. The power delivered to the electric vehicles for charging is controlled based on the dynamically adjusted charge plan.

For the purpose of this application, the following definitions may be employed. For the purpose of this disclosure, the following definitions of the terms should be taken in a larger scope in a non-limiting manner.

The term "multi-unit dwelling" refers to a multi-unit structure whose primary function is to serve as living quarters for people, such as apartment buildings, condominiums, duplexes, and townhomes. However, "multi-unit dwelling" may also refer to shared office spaces assigned to one organization or several organizations.

The terms "grid", "electrical grid", "power grid", and "utility" have been used interchangeably throughout the description, and they refer to an interconnected network of one or more components for electricity delivery from producers such as power stations to consumer loads.

The terms "electric switchboard", "central electric switchboard", "electrical switchboard", or "switchboard" refers to a device that receives electric power from the grid and distributes electricity to several smaller load circuits or one or more sub-switchboards. The electric switchboard may be located within the premises of the multi-unit dwelling or within a dedicated compact electrical substation.

The terms "electric vehicles", "a plurality of vehicles", "a plurality of electric vehicles", and "vehicles" have been used interchangeably throughout the description, and they refer to one or more electric vehicles, such as electric cars, electric scooters, electric bikes, *etc.* The electric vehicles also include electric vehicles with fully electric drivetrains and plug-in hybrid electric vehicles.

The term "charger" refers to a device with an in-built AC/DC converter to convert the Alternative Current (AC) to Direct Current (DC) and allow the electric vehicle to be connected for charging.

The terms "centralized charging station", "charging station", "EV charging station" have been used interchangeably throughout the description, and they refer to a single centralized platform having a plurality of chargers for charging a plurality of electric vehicles.

The term "load" in the multi-unit dwelling refers to a plurality of electrical and electronic components, devices, machines, appliances, *etc.* in a house or an apartment. The term "load" in the centralized charging station refers to the plurality of electrical vehicles, such as electric cars, electric scooters, *etc.,* that are connected to the charger for charging.

The term "consolidated dwelling meter", or "consolidated meter excluding charger meter" in the multi-unit dwelling refers to a power meter connected to the electric switchboard for monitoring the total combined power consumption of all houses, apartments, and common/shared public areas in the multi-unit dwelling excluding the consumption of the charger(s) located in the charging station.

The term "consolidated dwelling meter including charger meter" refers to a power meter for monitoring the total combined power consumption of all houses, apartments, common/public areas, *etc.* in the multi-unit dwelling and also the consumption of the charger(s) located in the charger station.

The term "consolidated charger meter" in the centralized charging station refers to a power meter for reading the total combined power consumption of the plurality of chargers.

The term "charger meter" refers to a power meter for reading the individual power consumption of each of the plurality of electric vehicles.

The terms "apartment meter", "house meter", and "individual meter" have been used interchangeably throughout the description, and they refer to an individual meter in each apartment, for monitoring energy consumption of the house or the apartment, *etc.*

The terms "network", "network communication", and "communication network" have been used interchangeably throughout the description, and they refer to a group communications link that connects two or more electronic devices capable of exchanging information in the form of signals through wired or wireless connections.

The term "server system" refers to a computing device or machine-readable instructions implemented on a computing device and capable of receiving signals from electronic devices and processing the same. One of the processed signals or commands it receives comes from meters and other commands it receives and sends to the electronic devices and chargers as a part of a control operation.

The term "integrated server", or "integrated server system" have been used interchangeably throughout the description, and they refer to a computing device or a set of machine-readable instructions that can be locally integrated with a charger for monitoring and control of charging of the electric vehicles without needing a communication setup between the charger and a remotely located centralized controlling device.

The term, "real-time" refers to without intentional delay, given the processing limitations of hardware/software/firmware involved and the time required to accurately measure/receive/process/transmit data as practically possible.

Electrical power from an electrical grid is received at a central electric switchboard from where it is distributed to a multi-unit dwelling and a centralized charging station. The multi-unit dwelling includes several individual apartments and a common public area. Each one of the individual apartments has their own dedicated electric switchboards that deliver power to electrical loads such as devices, appliances, *etc.,* and the electrical power consumed by the individual apartment is monitored through a dedicated apartment meter. A public area meter monitors and accounts for the power consumed by the common public area in the multi-unit dwelling. The consolidated power consumed by the multi-unit dwelling is monitored and accounted through a consolidated dwelling meter (interchangeably referred to as "consolidated meter excluding charger meter"). The distributed structure of power delivery in the multi-unit dwelling through several switchboards is to isolate any adverse event such as voltage or current surge, fire, and connection failure in one section of the distributed structure from other sections of the distributed structure. The centralized charging station distributes electrical power from the central electric switchboard to several chargers for charging respective electric vehicles connected to the chargers, and the electrical power consumed by the centralized charging station is monitored through a consolidated charger meter. For the purposes of the invention, it is envisaged that all the metering devices, viz., the consolidated meter including charger meter, the consolidated meter excluding charger meter, the consolidated charger meter, the individual apartment meters, and the like are equipped with power sensors capable of measuring characteristics of electrical power such as voltage (in Volts), current (in Amperes), and power (in Watt or kilowatt). In that regard, the power sensors may be of several types including, but not limited to, hall-effect sensors, inductive sensors, direct measurement sensors, and voltage response measurement sensors.

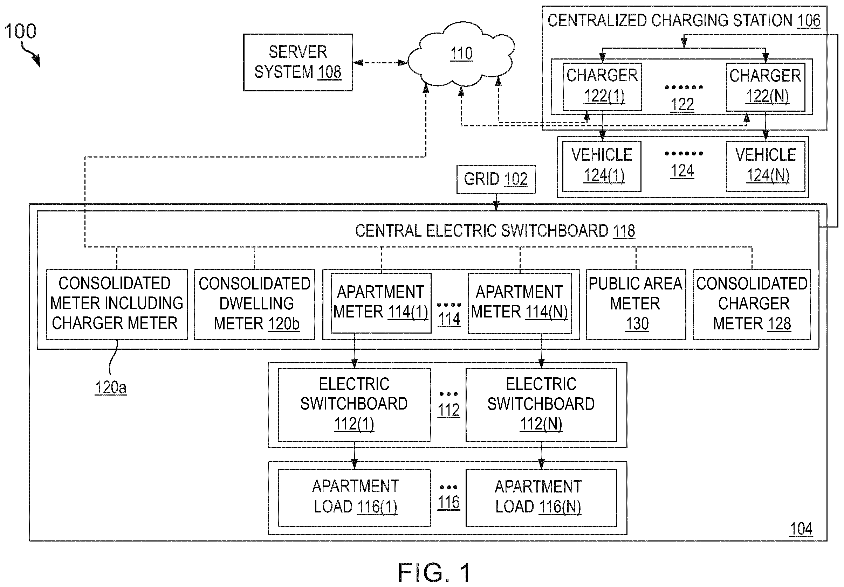

Various example embodiments of the present disclosure are described hereinafter with reference to FIG. 1 to FIG. 9.

FIG. 1 illustrates a schematic diagram of a system 100 for dynamically balancing the energy demand of electric vehicles using a reserve energy capacity of a multi-unit dwelling 104 connected to a grid 102 (also referred to as "an electrical grid 102" or "a power grid 102"), in accordance with an embodiment of the present disclosure. The system 100 includes the power grid 102, the multi-unit dwelling 104, and a centralized charging station 106. The power grid 102, the multi-unit dwelling 104, and the centralized charging station 106 are connected to a server system 108 via a communication network 110. Some examples of the communication network 110 may include wired networks, wireless networks, or a combination thereof. Examples of wired networks may include the Ethernet, Local Area Networks (LANs), fiber-optic cable networks, and the like. Examples of wireless networks may include cellular networks like Global System for Mobile Communications (GSM), Third or Fourth Generation (3G/4G), Code-Division Multiple Access (CDMA) based networks, IEEE 802.11 (Wi-Fi) based wireless LANs, Bluetooth or Zigbee networks, and the like. An example of a combination of wired and wireless networks may include the Internet.

The power grid 102 supplies electrical power to the multi-unit dwelling 104 through a central electric switchboard 118. A consolidated meter 120a (including the power consumed by the centralized charging station 106) is electrically coupled to the central electric switchboard 118 and monitors the electrical power being supplied through the central electric switchboard 118. The multi-unit dwelling 104 is envisaged to include several individual apartments, houses, or private living units along with one or more common public areas (*e.g.* lobbies, sidewalks, swimming pools). Each apartment, house, or private living unit (not shown in FIG. 1) has an individual meter to record the power and energy consumed by the apartment or the house.

As shown in FIG. 1, the multi-unit dwelling 104 has a plurality of electrical switchboards 112(1), 112(2), ... 112(N) (`N' is a natural number) (hereinafter, collectively referred to as "electrical switchboards 112"). One of the electrical switchboards 112 can be allocated for each apartment. A plurality of apartment meters 114(1), 114(2), ... 114(N) (`N' is a natural number) (hereinafter, collectively referred to as "apartment meters 114") for the plurality of apartments is coupled to the central electric switchboard 118. The central electric switchboard 118 also includes the consolidated dwelling meter 120b for monitoring the power consumption of the multi-unit dwelling 104. The individual meters, for example, the apartment meters 114(1), 114(2), ... 114(N) measure the power consumption in respective apartments. Equipment consuming electrical power in the apartments has been referred to as a plurality of apartment loads 116(1), 116(2), ... 116(N) (`N' is a natural number) (hereinafter, collectively referred to as "loads 116" or "apartment loads 116"). Each of the plurality of loads 116 includes one or more home appliances, for example, television, dishwasher, washing machine, microwave oven, electric cooker, laptop, computer, *etc.*

The centralized charging station 106 has a plurality of chargers 122 capable of charging a plurality of electric vehicles 124. The plurality of chargers 122(1), 122(2), ... 122(N) (`N' is a natural number) are collectively referred to as "chargers 122", similarly, the plurality of electric vehicles 124(1), 124(2), ... 124(N) (`N' is a natural number) are collectively referred to as "electric vehicles 124" or "vehicles 124". Each of the electrical vehicles 124 can be plugged into one of the chargers 122. The chargers 122 draw electrical power from the central electric switchboard 118 and the electrical power consumption of the chargers 122 is metered by a consolidated charger meter 128 located in the central electric switchboard 118. The consolidated charger meter 128 measures the total energy and power consumed by the totality of connected electrical vehicles 124 through the chargers 122. Each of the chargers 122 has a respective individual meter (not shown) collectively referred to as "individual meters", to measure the electrical energy supplied to the electric vehicles 124, for example. 124(1), 124(2), ... 124(N), when connected for charging.

In addition to the plurality of loads 116, the multi-unit dwelling 104 includes a public area with public area loads such as lighting, air-conditioning, security systems, *etc.* which are metered by a public area meter 130 located in the central electric switchboard 118. The electrical power is supplied to the multi-unit dwelling 104 from the central electric switchboard 118.

The server system 108 receives data related to the consolidated power consumption of the multi-unit dwelling 104 from the consolidated dwelling meter 120b. It should be noted that the consolidated dwelling meter 120b monitors the power consumption of the multi-unit dwelling 104 excluding the power consumption by the chargers 122, whereas the consolidated meter 120a monitors the power consumption of the multi-unit dwelling 104 including the power consumption by the chargers 122. In some embodiments the "consolidated dwelling meter" 120b is also referred to as "consolidated meter excluding the charger meter" and the "consolidated meter" 120a is also referred to as "consolidated meter including the charger meter". The server system 108 receives consolidated energy demand of the electric vehicles 124 from the chargers 122 connected to the electric vehicles 124, respectively. A reserve power capacity for the multi-unit dwelling 104 is calculated by comparing a total maximum power capacity of the multi-unit dwelling 104 and the predicted required power in the next predetermined time period of the day. The server system 108 also calculates a charge plan based on the reserve power capacity and the consolidated energy demand of the electric vehicles 124. The server system 108 sets a start time to start charging the electric vehicles 124 based on the charge plan, such that the electric vehicles 124 are charged within a first pre-determined time interval during a non-peak energy consumption period. The pre-determined time interval during the non-peak energy consumption period, for example, may be from 10:00 pm on the date of charging to the morning 6:00 am the next day. The charge plan is set by the server system 108, such that all the electric vehicles 124 connected to the chargers 122(1), 122(2), ... 122(N) are charged on or before 6:00 am the morning, the next day.

The server system 108, in real-time calculates, a free power capacity of the multi-unit dwelling 104 by comparing the total maximum power capacity of the multi-unit dwelling 104 and the consolidated power consumption of the multi-unit dwelling 104. It is essential to reserve the free power capacity in order to supply uninterrupted power to the multi-unit dwelling 104, as the actual power requirement may exceed at any time, for example, on unexpected occasions where the power requirement in the multi-unit dwelling 104 may be relatively higher than the predicted required power. The server system 108, reserves a pre-determined power buffer value in the free power capacity of the multi-unit dwelling 104. The server system 108 calculates the free power capacity of the multi-unit dwelling 104 by excluding the pre-determined power buffer value and using the calculated free power capacity to dynamically adjust the charge plan. To be more specific, the server system 108 may adjust the free power capacity by subtracting a pre-determined power buffer value to obtain an updated free power capacity. In real-time at least the charge plan is dynamically adjusted based on the free power capacity or the updated free power capacity (as applicable) of the multi-unit dwelling 104 and the consolidated energy demand of the electric vehicles 124 based on feedback from the chargers 122.

It should be noted here that in case the power requirement of both the consolidated power consumption of the multi-unit dwelling 104 and the consolidated energy demand of the electric vehicles 124 exceeds the allocated power received from the grid 102, additional power measured as additional power throughput through the power grid 102 can be purchased or received from the grid 102, thereby increasing the maximum throughput capacity for the whole building and allocating more power to the central electric switchboard 118. However, in typical scenarios the increase in the maximum throughput capacity may not be bought ad hoc, as the same has to be demanded by the grid operator and the grid operator evaluates if the lines connecting the building to transport more energy and other transmission apparatus such as the transformer allows to supply of the additional energy. In such a situation, the total maximum power capacity of the multi-unit dwelling 104 is a sum of an allocated maximum power capacity bought by the apartment users of the multi-unit dwelling 104 along with additional power capacity bought by an operator of the centralized charging station 106, both received from the electrical grid 102.

The server system 108 in real-time is configured to predict energy consumption in the next predetermined time period of the multi-unit dwelling 104 based on historical data of an energy consumption of the multi-unit dwelling 104 on a same day of a penultimate year. The server system 108 may also calculate the energy consumption due to at least one external factor. The at least one external factor may include, for example, a current ambient temperature, precipitation, humidity, gradual degradation of power cables and electrical transmission apparatus, holiday/vacation/sporting seasons, *etc.* The predicted required power is calculated by adjusting the predicted power consumption with the calculated energy consumption due to the at least one external factor. The outside temperature has an impact on heating and cooling demand. Also, the holiday has an impact on reducing energy consumption for heating and cooling when some of the apartments or houses are not occupied. Further, any special events in the apartment or houses may increase the power consumption. Moreover, more power would be drawn from the grid 102 where the conductivity of the electrical transmission cables or efficiency of step-up/step-down transformers have degraded over time. These external factors need to be considered while calculating the reserve power capacity.

In one embodiment of the invention, a buffer factor (also referred to as a "pre-determined energy buffer value" or "power buffer value") can be set by the server system 108 in the reserve power capacity. The reserve power capacity for the multi-unit dwelling 104 is calculated by comparing the total maximum power capacity of the multi-unit dwelling 104 and the predicted required power in the next predetermined time period of the day. The server system 108 calculates the free power capacity (updated free capacity) of the multi-unit dwelling 104 by subtracting the pre-determined power buffer value from the free energy capacity of the multi-unit dwelling 104. In real-time, the server system 108 dynamically adjusts the charge plan (updated charge plan) based on the updated free energy capacity of the multi-unit dwelling 104 and the consolidated energy demand of the electric vehicles 124. The server system 108 can then set a new start time to start charging the plurality of vehicles 124 based on the updated charge plan, such that the electric vehicles 124 are charged within the pre-determined time interval during the non-peak energy consumption period. It should be noted that the buffer factor provides an additional cushion to the free power capacity therefore any unexpected surge in the energy consumption in the multi-unit dwelling 104 can be easily managed without compromising the energy requirements of the multi-unit dwelling 104, by reducing the energy consumption of the electric cars and using the buffer factor to guarantee that the totality of vehicles is filled at the predefined time.

In one embodiment of the invention, the electric vehicles 124 are connected to the respective chargers 122 via ISO 15118 compliant connections. The ISO 15118 standard specifies the communication between Electric Vehicles (EV), including Battery Electric Vehicles and Plug-In Hybrid Electric Vehicles, and the Electric Vehicle Supply Equipment (EVSE). In one embodiment, the chargers 122 (*e.g.,* the chargers 122(1), 122(2), ... 122(N)) are remotely connected to the server system 108 and communicate with the server system 108 with messages/signals defined via Open Charge Point Protocol (OCPP) 2.01. The OCPP is an open-source communication standard for EV charging stations. Any EV charging station, for example, the centralized charging station 106 can be configured to run OCPP 2.01 or any similarly OCPP-compliant software. The electric vehicles 124 report via the chargers 122 (*e.g.,* chargers 122(1), 122(2), ...122(N)) to the server system 108, the electrical energy required to charge the connected electric vehicles 124 to full capacities. The server system 108 converts the required energy into "time and predefined power throughput required to charge an electric vehicle" (is equal to, the required kW x hours) so that the electric vehicles 124 charging time is maximized and aggregated throughput is moved to non-peak hours and all electric vehicles 124 are charged to their full capacities, for example, by 06:00 am.

It should be noted that the central electric switchboard 118 is a centralized power distribution hub that is responsible for supplying electrical power to all of the electrical switchboards 112 for the apartments and the centralized charging station 106. Energy consumed in local sub-switches is reported to energy submeters in the central electric switchboard 118. Such reporting includes the consumption in the individual switchboards which do not include any meters but include protections. For example, if one device consumes too much energy, the protection in a sub-switch stops power distribution to that particular socket or device and is metered by the consolidated meter 120b (excluding the charger meter). All the meters communicate with the server system 108 thereby enabling server system 108 to calculate the charge plan for the electric vehicles 124 connected to the respective chargers 122. In some embodiments, the centralized charging station 106 can use an electronic switchboard for connecting chargers 122 with the server system 108 using one or more Ethernet cables. In such scenarios, the electronic switchboard acts as an electronic data communication switchboard for connecting chargers 122 with the server system 108.

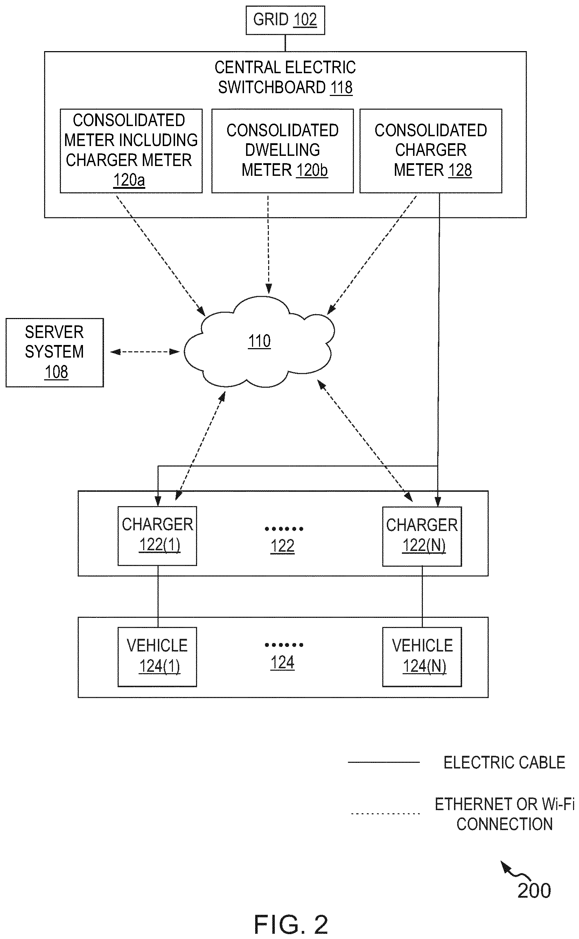

FIG. 2 illustrates a schematic diagram illustrates a data exchange network 200 between several elements of the system 100 of FIG. 1, in accordance with an embodiment of the present disclosure. For the sake of simplicity and brevity, only one charger 122(1), and one vehicle 124(1) have been illustrated in FIG. 2. The consolidated dwelling meter 120b (excluding consumption of the charger meter) of the multi-unit dwelling 104 accounts the consolidated consumption of all individual apartment meters 114 (shown in FIG. 1) and the public/common areas/spaces in the multi-unit dwelling 104. The consolidated meter 120a monitors the power consumption of the multi-unit dwelling 104 including the power consumption by the chargers 122. The consolidated charger meter 128 for the electric vehicles 124 accounts for the consumption of all the electric vehicles 124 connected based on the charging request of the electric vehicles 124.

The charger 122(1) acts as an intermediary and connects the electric vehicle 124(1) and the server system 108. The charger 122(1) collects the information on the energy required from the connected the electrical vehicle 124(1) and sends this information to the server system 108 through the communication network 110. The server system 108 calculates the charge plan and pushes the charge plan to the charger 122(1). The charger 122(1) communicates the charge plan to the electrical vehicle 124(1). The charge plan is then utilized by the vehicle 124(1) to request electrical energy from the central electric switchboard 118 via the charger 122(1). During the charging process, the server system 108 dynamically adjusts the charging plan based on the free power capacity of the multi-unit dwelling 104 and the consolidated energy demand of the plurality of vehicles 124. The power throughput to the vehicle 124(1) is modified as per the dynamically adjusted charge plan. The charger 122(1) may also be provided with metering capabilities for metering the consumption of the electrical energy by the electrical vehicle 124(1) for invoicing or billing purposes.

The electrical vehicles 124 are the ultimate information-sending and execution devices for instructing the respective chargers 122 for charging quantity. The electrical vehicles 124 deliver to the server system 108 the energy requirements and receive via the chargers 122, the instruction on how much energy should be requested for charging so that the charging will be completed before a predefined instant of time, for example, 06:00 am the next day. The server system 108 is connected to the consolidated dwelling meter 120b (also referred to as "consolidated meter excluding charger meter 120b") of the multi-unit dwelling 104 and receives information about the consumption of all apartments and the public/common areas/spaces. The server system 108 is connected to each one of the chargers 122(1), 122(2), and so on, and receives information about the energy demand of the connected electric vehicles 124(1), 124(2), and so on via the chargers 122(1), 122(2), and so on, respectively. As shown in the FIG. 2, from the central electric switchboard 118, the electrical power is transmitted to the chargers 122(1), 122(2), and so on using power transmission cables.

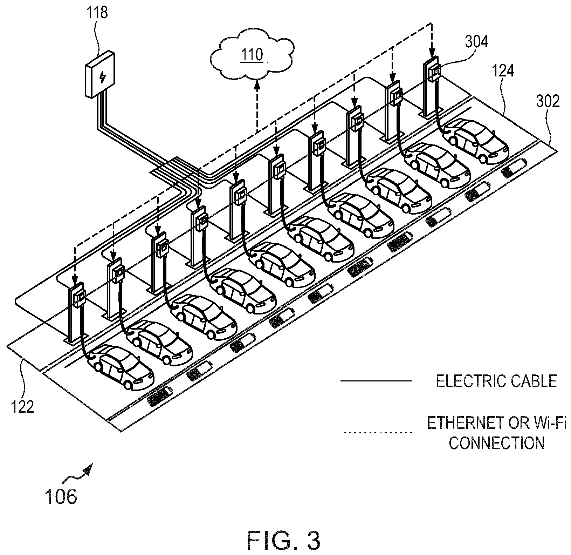

FIG. 3 illustrates a schematic diagram of the centralized charging station 106 used for charging the plurality of electric vehicles 124, in accordance with an embodiment of the present disclosure. In several implementations of the invention, the server system 108 may also be connected to each individual meter (*e.g.,* meter 304) in each charger (*e.g.,* 122(1), 122(2), or 122(N)) and verifies that the loading instructions for all the electric vehicles 124 are in conformance with individual consumptions metered with the help of the individual meters during charging of the electrical vehicles 124. The server system 108 calculates dynamically the reserve electric power available, by comparing the power consumption reported by the consolidated dwelling meter 120b (excluding the charger meter) (in FIG. 1) for the multi-unit dwelling 104 to the maximum power capacity available for the multi-unit dwelling 104 and gives periodical update information via the chargers 122 (*e.g.,* 122(1), 122(2),122(N)) to the respective electric vehicles 124 (*e.g.,* 124(1), 124(2),124(N)) to ask for more or less energy. The chargers 122 receive electrical power from the central electric switchboard 118. The information containing energy requirements of the electrical vehicles 124 is obtained by the chargers 122 through the ISO 15118 compliant connections and transferred to the server system 108 through the communication network 110 as per OCPP 2.01.

In one embodiment, the server system 108 receives information from the consolidated dwelling meter 120b about the actual power consumption of the multi-unit dwelling 104. Further, the server system 108 calculates the individual energy demand for each of the electric vehicles 124, the availability of the reserve power, and makes a decision when to start loading each individual electric vehicle (*e.g*., 124(1), 124(2), 124(N)) in the evening with an individually calculated power throughput per charger by giving these instructions to the connected charger (*e.g*., 122(1), 122(2),122(N)). The charging status of each individual electric vehicle (*e.g*., 124(1), 124(2), 124(N)) is shown using a visual indicator, for example, a plurality of displays 302, at the time of charging the individual electric vehicle (*e.g*., 124(1), 124(2), 124(N)).

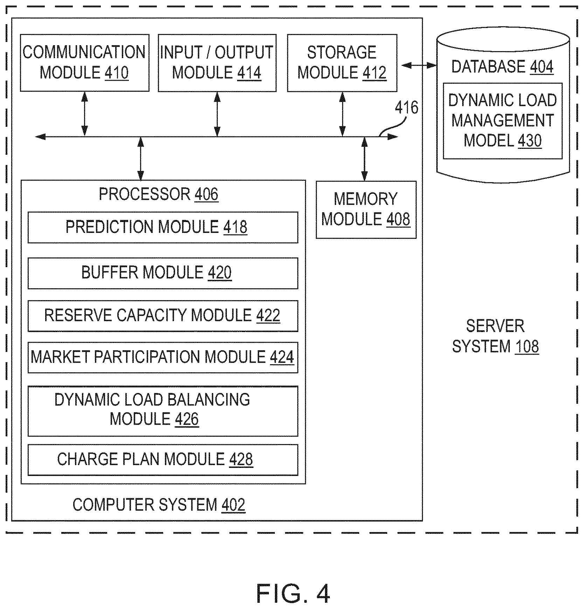

FIG. 4 illustrates a block diagram of the server system 108 of the system 100 of FIG. 1, in accordance with an embodiment of the present disclosure. The server system 108 includes a computer system 402 and a database 404. The computer system 402 includes at least one processor 406 (also referred to as "a processor 406") for executing machine-executable instructions, a memory module 408, a communication module 410, a storage module 412, and an input/output module 414 (hereinafter referred to as "I/O module 414"). The one or more components of the computer system 402 communicate with each other via a bus 416. The components of the server system 108 provided herein may not be exhaustive, and the server system 108 may include more or fewer components than those depicted in FIG. 4. Further, two or more components may be embodied in one single component, and/or one component may be configured using multiple sub-components to achieve the desired functionalities.

It is noted that although the server system 108 is depicted to include only one processor 406, the server system 108 may include a greater number of processors therein. In an embodiment, the memory module 408 is capable of storing the machine-executable instructions. Further, the processor 406 is capable of executing the stored machine-executable instructions. In an embodiment, the processor 406 may be embodied as a multi-core processor, a single core processor, or a combination of one or more multi-core processors and one or more single core processors. For example, the processor 406 may be embodied as one or more of various processing devices, such as a coprocessor, a microprocessor, a controller, a Digital Signal Processor (DSP), a processing circuitry with or without an accompanying DSP, or various other processing devices including integrated circuits such as, for example, an Application Specific Integrated Circuit (ASIC), a Field Programmable Gate Array (FPGA), a Microcontroller Unit (MCU), a hardware accelerator, a special-purpose computer chip, or the like. In an embodiment, the processor 406 may be configured to execute hard-coded functionality. In an embodiment, the processor 406 is embodied as an executor of software instructions, wherein the instructions may specifically configure the processor 406 to perform the algorithms and/or operations described herein when the instructions are executed.

The memory module 408 may be embodied as one or more volatile memory devices, one or more non-volatile memory devices, and/or a combination of one or more volatile memory devices and non-volatile memory devices. For example, the memory module 408 may be embodied as magnetic storage devices (such as hard disk drives, floppy disks, magnetic tapes, *etc.*)*,* optical magnetic storage devices (*e.g.,* magneto-optical disks), Compact Disc Read-Only Memory (CD-ROM), Compact Disc-Recordable (CD-R), Compact Disc-Rewritable (CD-R/W), Digital Versatile Disc (DVD), Blu-ray^{®} Disc (BD), and semiconductor memories (such as mask ROM, Programmable ROM (PROM), Erasable PROM (EPROM), flash ROM, Random Access Memory (RAM), *etc.*)*.* In some example embodiments, the memory module 408 may also store one or more machine learning models for predicting the likelihood of the user conversion on presenting a conversational promotion.

The I/O module 414 is configured to facilitate the provisioning of an output to one or more electrical chargers 122, from the server system 108. The I/O module 414 may also include mechanisms configured to receive inputs from one or more consolidated energy meters (for example, the consolidated meter 120b (excluding the charger meter) and/or the consolidated charger meter 128), one or more consumers of the system 100, one or more electrical vehicles 124, one or more electrical chargers 122, to the server system 108, *etc.* of the system 100. The I/O module 414 is configured to be in communication with the processor 406 and the memory module 408. Examples of the I/O module 414 include, but are not limited to, an input interface and/or an output interface. Examples of the input interface may include, but are not limited to, a keyboard, a mouse, a joystick, a keypad, a touch screen, soft keys, a microphone, and the like. Examples of the output interface may include, but are not limited to, a display such as a light-emitting diode display, a Thin-Film Transistor (TFT) display, a liquid crystal display, an Active-Matrix Organic Light-Emitting Diode (AMOLED) display, a microphone, a speaker, a ringer, a vibrator, and the like.

In an example embodiment, the processor 406 may include I/O circuitry configured to control at least some functions of one or more elements of the I/O module 414, such as, for example, a speaker, a microphone, a display, and/or the like. The processor 406 and/or the I/O circuitry may be configured to control one or more functions of the one or more elements of the I/O module 414 through computer program instructions, for example, software and/or firmware, stored on a memory, for example, the memory module 408, and/or the like, accessible to the processor 406.

The communication module 410 may include several channel interfaces to receive information from one or more consolidated energy meters, one or more consumers of the system 100, one or more electrical vehicles 124, and one or more electrical chargers 122 of the system 100. The storage module 412 is any computer-operated hardware suitable for storing and/or retrieving data. In one embodiment, the storage module 412 is configured to store information related to historical data representing energy consumption on the same day of the penultimate year, a buffer factor to be subtracted from the reserve capacity, consolidated power consumption data of the multi-unit dwelling 104 and the consolidated energy consumption date of the plurality of electric vehicles 124. The storage module 412 may include multiple storage units such as hard drives and/or solid-state drives in a Redundant Array of Inexpensive Disks (RAID) configuration. In some embodiments, the storage module 412 may include a Storage Area Network (SAN) and/or a Network Attached Storage (NAS) system. In one embodiment, the storage module 412 may correspond to a distributed storage system, wherein individual databases are configured to store custom information, such as consumer data logs, consumer preferences, *etc.*

In some embodiments, the processor 406 and/or other components of the processor 406 may access the storage module 412 using a storage interface (not shown in FIG. 2). The storage interface may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the processor 406 and/or the modules of the processor 406 with access to the storage module 412.

It is understood that the server system 108 as illustrated and hereinafter described is merely illustrative of a system that could benefit from embodiments of the invention and, therefore, should not be taken to limit the scope of the invention. It is noted that the server system 108 may include fewer or more components than those depicted in FIG. 2. In an embodiment, the server system 108 may be implemented as a platform including a mix of existing open systems, proprietary systems, and third-party systems. In another embodiment, the server system 108 may be implemented completely as a platform including a set of software layers on top of existing hardware systems. In an embodiment, one or more components of the server system 108 may be deployed in a web server. In another embodiment, the server system 108 may be a standalone component in a remote machine connected to the communication network (such as the network 110 explained with reference to FIG. 1) and capable of executing a set of instructions (sequential and/or otherwise) so as to predict the need for a concurrent digital channel to serve the user better. Moreover, the server system 108 may be implemented as a centralized system, or, alternatively, the various components of the server system 108 may be deployed in a distributed manner while being operatively coupled to each other. In an embodiment, one or more functionalities of the server system 108 may also be embodied as a client within devices, such as users' devices, energy meters, the chargers 122, *etc.* In another embodiment, the server system 108 may be a central system that is shared by or accessible to each of such devices. In another embodiment, the server system 108 may be a remote system accessible to each of such devices through a wireless network. In some embodiments, the server system 108 can be integrated with the chargers 122 to form an integrated charger-server system

The server system 108 is connected with the consolidated meter 120b (excluding the charger meter) of the multi-unit dwelling 104 and receives information about the power consumption of the multi-unit dwelling 104. The server system 108 is connected with each one of the chargers 122 (*e.g.* chargers 122(1), 122(2), ... 122(N)) and receives information about the energy demand of the connected electric vehicle (*e.g.,* 124(1), 124(2), ... 124(N)) via the charger (*e.g*., charger 122(1), 122(2), ... 122(N)). The server system 108 is connected to the individual meters of each charger and also to the consolidated charger meter 128 of the central electric switchboard 118 and verifies that the loading instructions for all the electric vehicles 124 correspond to consumption metered with the individual meters. The processor 406 has, without limitation, a prediction module 418, a buffer module 420, a reserve capacity module 422, a market participation module 424, and a charge plan module 428.

The prediction module 418 is configured to predict, in real-time, an estimated power requirement in the next predetermined time period of the multi-unit dwelling 104 based on historical data of the power consumption of the multi-unit dwelling 104 on the same day of the penultimate year. The prediction module 418 is further configured to calculate in real-time the power consumption due to at least one external factor. The prediction module 418 is further configured to calculate the predicted required power by adjusting the predicted energy consumption of the next predetermined time period of the multi-unit dwelling 104 on the same day of the penultimate year with the calculated energy consumption in real-time due to at least one external factor.

The buffer module 420 is configured to calculate an updated free power capacity of the multi-unit dwelling 104 by subtracting a pre-determined power buffer value (*e.g.* 20% of the free power capacity can be set as the pre-determined power buffer value) from the free power capacity of the multi-unit dwelling 104. In one embodiment of the invention, a buffer factor (also referred to as a "pre-determined energy buffer value" or "power buffer value") can be set by the buffer module 420 in the reserve power capacity. The reserve capacity module 422 is configured to calculate the reserve power capacity for the multi-unit dwelling 104 by comparing the total maximum power capacity of the multi-unit dwelling 104 and predicted required power in next predetermined time period of a day. The market participation module 424 is configured to aggregate the demand of the chargers 122 of the multi-unit dwelling 104, the charger operating company can offer to participate in the demand respond market by reducing or increasing the loading of the batteries in the electric vehicles124 and helping to stabilize demand in the electric grid 102. The charge plan module 428 is configured to calculate the charge plan in real-time based on the free power capacity of the multi-unit dwelling 104 and the consolidated energy demand of the plurality of vehicles 124.
Furthermore, the server system 108 is associated with the database 404. In an embodiment, the database 404 may be embodied within the server system 108 or communicably coupled to the server system 108. In another embodiment, the database 404 stores one or more autonomous artificial intelligence or machine learning-based models, for example, a dynamic load balancing module 430. The dynamic load balancing module 430 is configured to dynamically adjust, in real-time, at least the charge plan based on the updated free energy capacity of the multi-unit dwelling 104 and the consolidated energy demand of the plurality of vehicles 124. The power delivered to the electric vehicles (124) is controlled by the dynamic load balancing module 430, based upon the dynamically adjusted charge plan.

In some embodiments, the database 404 provides a storage location to store data associated with the system 100.

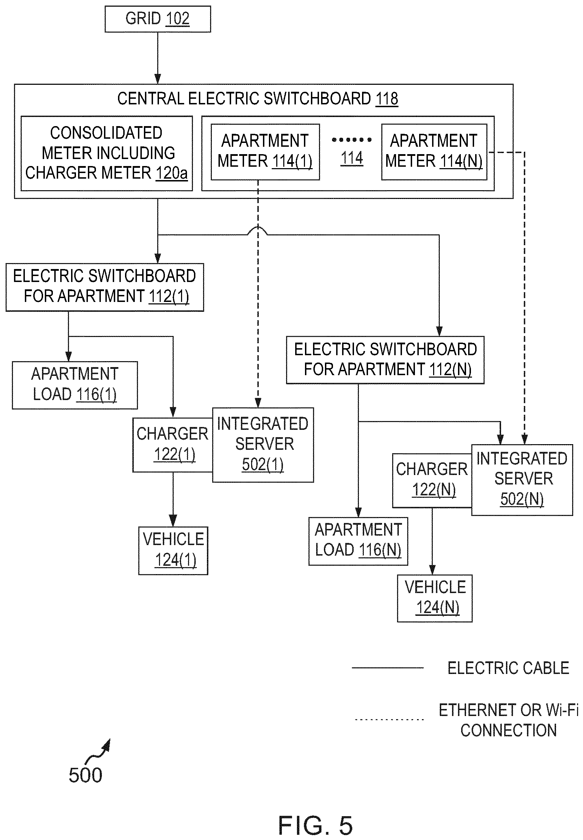

FIG. 5 illustrates a schematic diagram of a system 500 for dynamically balancing the energy demand of electric vehicles using spare reserve energy capacity of an apartment connected to the electrical grid 102, in accordance with another embodiment of the present disclosure. The system 500 includes the apartment meters 114(1) to 114(N) associated with respective several apartments. The system 500 also includes integrated server systems 502(1) to 502(N) (`N' is a natural number) integrated with the respective chargers 122(1) to 122(N). It should be noted that for the sake of simplicity the integrated server systems 502(1) and 502(N), the electric switchboards 112(1) and 112(N), the electric vehicles 124(1) and 124(N) and chargers 122(2) and 122(N)) are only shown in FIG. 5. The system 500 can be configured to have the integrated server systems 502(1) to 502(N), the electric switchboards 112(1) to 112(N), the electric vehicles 124(1) to 124(N) and chargers 122(2) to 122(N)) without limitation.

The integrated server system 502(1), the apartment meter 114(1), the charger 122(1), and the vehicle 124(1) are dedicated to the first apartment. Similarly, the integrated server system 502(N), the apartment meter 114(N), the charger 122(N), and the vehicle 124(N) are dedicated to the last (N^{th}) apartment. The integrated server systems 502(1) and 502(N) are configured to receive consolidated power consumption of the apartment from the apartment meter 114(1) and 114(N), respectively, wherein the apartment is connected to the electrical grid 102 through the respective electric switchboards 112(1) and 112(N) and the central electric switchboard 118. The integrated server systems 502(1) and 502(N) are also configured to receive individual energy demands of respective electric vehicles 124(1) and 124(N) connected to the integrated server systems 502(1) and 502(N), respectively. The integrated server systems 502(1) and 502(N) are configured to calculate the reserve power capacity for the apartment by comparing the total maximum power capacity of the apartment and predicted required power for the apartment in the next predetermined time period of a day. The integrated server systems 502(1) and 502(N) are configured to calculate a charge plan based on the reserve power capacity and the consolidated energy demand for only the respective electric vehicles 124(1) and 124(N). The integrated server systems 502(1) and 502(N) are configured to calculate in real-time free power capacity of the apartment by comparing the total maximum power capacity of the apartment and the consolidated power consumption of the apartment combined with the respective electric vehicle, reported by a respective apartment meter.

The integrated server systems 502(1) and 502(N) are configured to dynamically adjust, in real-time, at least the charge plan based on the free power capacity of the apartment and the consolidated energy demand of the electric vehicles 124(1) and 124(N). The integrated server systems 502(1) and 502(N) are configured to control power delivered to the one or more vehicles (*e.g.* vehicle 124(1)) based upon the dynamically adjusted charge plan. For the sake of simplicity and brevity, only the consolidated meter 120a (including the charger meter) and the apartment meters 114(1) and 114(N) are shown in the central electric switchboard 118, other meters that are required for the calculation of the charge plan of the electric vehicles 124 connected to the chargers 122 can also be included in the central electric switchboard 118 without limitation. In one embodiment of the invention, the integrated server systems 502(1) and 502(N) receive the consolidated power consumption of respective one or more vehicles (*e.g.* vehicles 124(1) and 124(2)) and an apartment. In such a scenario, an individual integrated server system (for example 502(1)) may be integrated with the charger 12(1), and the charger 122(1) includes one or more sockets connected to the one or more vehicles (*e.g.* vehicle 124(1)). In some embodiments, the individual integrated server system (for example, 502(1)) may be integrated with one of the plurality of chargers (*e.g.* 122(1)) and while the other chargers (*e.g.* 122(2) to 122(N)) may communicate with the integrated server system for dynamically balancing the energy demand of electric vehicles using spare reserve energy capacity of an apartment connected to the electrical grid 102.

It should be noted that the system 100 and the system 500 depicted in FIG. 1, FIG. 5, and the data exchange network 200 depicted in FIG. 2, explain different embodiments of the invention to achieve a dynamic balancing of the energy demands of electric vehicles 124, using the reserve power capacity of a multi-unit dwelling 104 connected to the electrical grid 102. For example, the system 100 depicted in FIG. 1 performs dynamic balancing of the energy demands of the electric vehicles 124 using the remote server system 108. The data exchange network 200 depicted in FIG. 2 specifically deals with the communication of the vehicles 124, the chargers 122, and the server system 108 while performing dynamic balancing of the energy demands of the electric vehicles 124. The system 500 depicted in FIG. 5 specifically deals with utilizing the integrated server system (*e.g.* the integrated server system 502(1)) for dynamic balancing the energy demands of electric vehicles 124. Further, the system 500 depicted in FIG. 5 uses the spare electric power from the apartment for charging the vehicles 124.

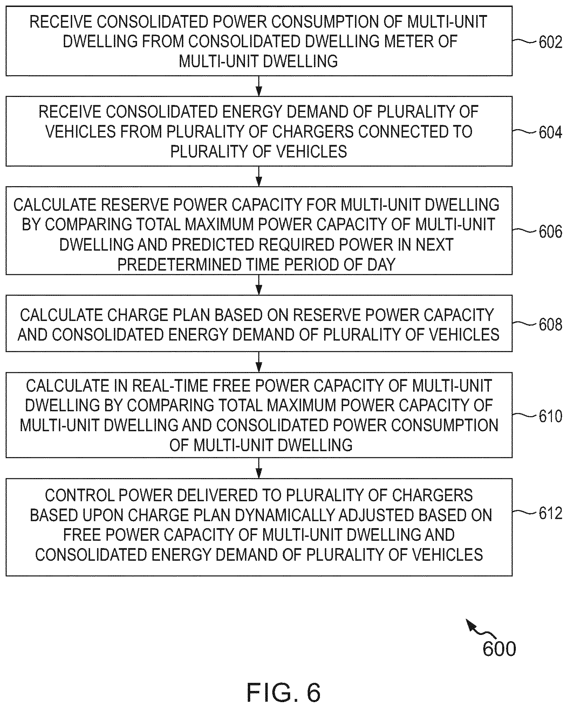

FIG. 6 illustrates a flow chart of a method 600 for dynamically balancing the energy demand of electric vehicles 124 using the reserve energy capacity of the multi-unit dwelling 104 connected to the electrical grid 102, in accordance with an embodiment of the present disclosure. Operations of the flow diagram of the method 600, and combinations of operations in the flow diagram of the method 600, may be implemented by, for example, hardware, firmware, a processor, circuitry, and/or a different device associated with the execution of software that includes one or more computer program instructions. The method 600 starts at operation 602.

At operation 602, the method 600 includes receiving, by the server system 108, the consolidated power consumption of the multi-unit dwelling 104 from the consolidated meter 120b (excluding the charger meter), wherein the multi-unit dwelling 104 is connected to the electrical grid 102 through the central electric switchboard 118.

At operation 604, the method 600 includes receiving, by the server system 108, the consolidated energy demand of the plurality of vehicles 124 from the plurality of chargers 122 connected to the plurality of vehicles 124, respectively.

At operation 606, the method 600 includes calculating, by the server system 108, the reserve power capacity for the multi-unit dwelling 104 by comparing the total maximum power capacity of the multi-unit dwelling 104 and predicted required power in next predetermined time period of a day.

At operation 608, the method 600 includes calculating, by the server system 108, a charge plan based on the reserve power capacity and the consolidated energy demand of the plurality of vehicles 124. The server system 108 sets a start time to start charging the plurality of vehicles 124 based on the charge plan, such that the plurality of vehicles 124 is charged within a first pre-determined time interval during a non-peak energy consumption period. In several example embodiments, the first pre-determined time interval may lie between 10:00 pm to the next day morning 06:00 am.

At operation 610, the method 600 includes calculating in real-time, by the server system 108, the free power capacity of the multi-unit dwelling 104 by comparing the total maximum power capacity of the multi-unit dwelling 104 and the consolidated power consumption of the multi-unit dwelling 104. The server system 108 dynamically adjusts in real-time at least the charge plan based on the free power capacity of the multi-unit dwelling 104 and the consolidated energy demand of the plurality of vehicles 124. In several embodiments of the invention, the server system 108 calculates an updated free power capacity of the multi-unit dwelling 104 by subtracting a pre-determined power buffer value from the free power capacity of the multi-unit dwelling 104. Further, for dynamically adjusting the charge plan, the server system 108 accounts for the updated free power capacity.

At operation 612, the method 600 includes controlling, by the server system 108, the power delivered to the plurality of chargers 122 based upon the charge plan (*i.e.* dynamically adjusted charge plan). The controlling operation is performed by comparing the power consumption of the charge plan with the power consumption of the charger meter 128. In an embodiment, the server system 108 sets a new start time to start charging of the plurality of vehicles 124 based on the charge plan (*i.e.* dynamically adjusted charge plan), such that the plurality of vehicles 124 is charged within a second pre-determined time interval during a non-peak energy consumption period.

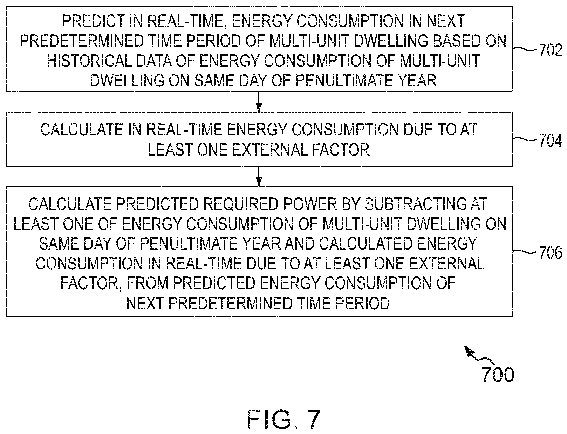

FIG. 7 illustrates a flow chart of a method 700 for calculating the predicted required power of the multi-unit dwelling 104, in accordance with an embodiment of the present disclosure. Operations of the flow diagram of the method 700, and combinations of operations in the flow diagram of the method 700, may be implemented by, for example, hardware, firmware, a processor, circuitry, and/or a different device associated with the execution of software that includes one or more computer program instructions. The method 700 starts at operation 702.

At operation 702, the method 700 includes predicting, in real-time, by the server system 108, the energy consumption in the next predetermined time period of the multi-unit dwelling 104 based on historical data of the power consumption of the multi-unit dwelling 104 on the same day of the penultimate year.

At operation 704, the method 700 includes calculating in real-time, by the server system 108, an energy consumption due to at least one external factor.

At operation 706, the method 700 includes calculating, by the server system 108, the predicted required power by adjusting the predicted energy consumption of the next predetermined time period of the multi-unit dwelling 104 on the same day of the penultimate year with the calculated power consumption in real-time due to at least one external factor.

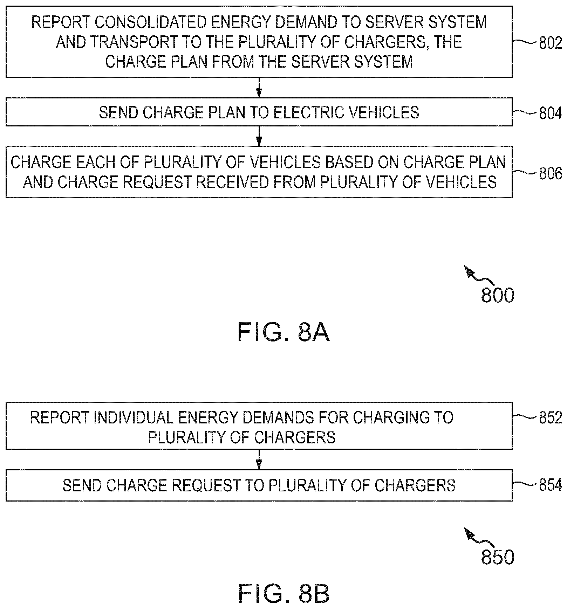

FIG. 8A illustrates a flow chart of a method 800 deployed by a charger for obtaining a charge plan from the server system 108 and disseminating electrical energy to the plurality of electric vehicles 124 as per the obtained charge plan, in accordance with an embodiment of the present disclosure. Operations of the flow diagram of the method 800, and combinations of operations in the flow diagram of the method 800, may be implemented by, for example, hardware, firmware, a processor, circuitry, and/or a different device associated with the execution of software that includes one or more computer program instructions. The method 800 starts at operation 802.

At operations 802, the method 800 includes reporting, by the plurality of chargers 122, the consolidated energy demand of the plurality of electric vehicles 124 to the server system 108 and transporting to the plurality of chargers 122 the charge plan from the server system 108.

At operation 804, the method 800 includes sending, by the plurality of chargers 122, the charge plan to the plurality of vehicles 124.

At operation 806, the method 800 includes charging, by the plurality of chargers 122, each of the plurality of vehicles 124 based on the charge plan and a charge request.

FIG. 8B illustrates a flow chart of a method 850 deployed by the plurality of electric vehicles 124 to report individual energy demands and request electrical energy as per the charge plan, in accordance with an embodiment of the present disclosure. Operations of the flow diagram of the method 850, and combinations of operations in the flow diagram of the method 850, may be implemented by, for example, hardware, firmware, a processor, circuitry, and/or a different device associated with the execution of software that includes one or more computer program instructions. The method 850 starts at operation 852.

At operation 852, the method 850 includes reporting, by the plurality of vehicles 124, individual energy demands for charging to the plurality of chargers 122. The consolidated energy demand of the plurality of vehicles 124 is calculated from the individual energy demands.

At operation 854, the method 850 includes sending, by each of the plurality of vehicles 124, a charge request to the plurality of chargers 122. As soon as the electric vehicles 124 start charging, the consolidated charger meter 128 reports to the server system 108, a charging status of the plurality of vehicles 124.

Based on FIGS. 8A and 8B, without limiting to the scope of the present disclosure, the overall process at the centralized charging station 106 can be summarized as follows:
- reporting, by the plurality of vehicles 124, individual energy demands for charging to the plurality of chargers 122, wherein the consolidated energy demand of the plurality of vehicles 124 is calculated from the individual energy demands;
- reporting, by the plurality of chargers 122, the consolidated energy demand to the server system 108;
- receiving, by the plurality of chargers 122, the charge plan from the server system 108;
- sending, by the plurality of chargers 122, the charge plan to the plurality of vehicles 124;
- sending, by each of the plurality of vehicles 124, a charge request to the plurality of chargers 122; and
- charging, by the plurality of chargers 122, each of the plurality of vehicles 124 based on the charge plan and the charge request.

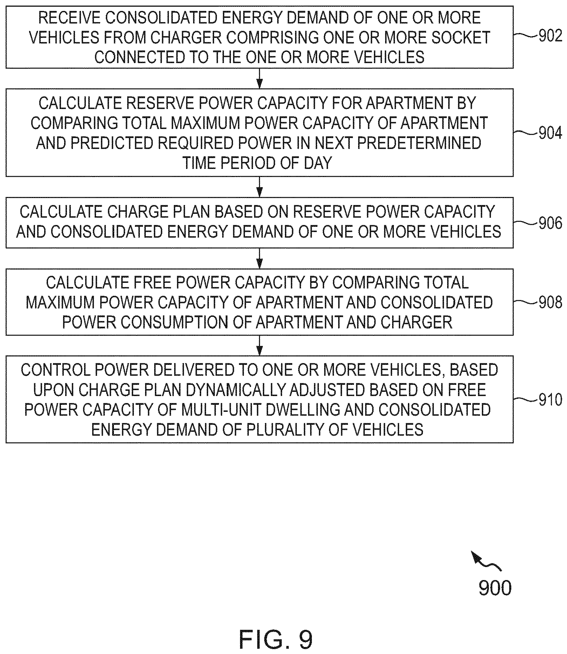

FIG. 9 illustrates a flow chart of a method 900 for dynamically balancing the energy demand of electric vehicles 124 using the reserve energy capacity of an apartment in the multi-unit dwelling 104 connected to the electrical grid 102, in accordance with an embodiment of the present disclosure. Operations of the flow diagram of the method 900, and combinations of operations in the flow diagram of the method 900, may be implemented by, for example, hardware, firmware, a processor, circuitry, and/or a different device associated with the execution of software that includes one or more computer program instructions. The method 900 starts at operation 902.

At operation 902, the method 900 includes receiving, by the integrated server system (*e.g*. integrated server system 502(1)), consolidated energy demand of one or more vehicles (*e.g.* vehicle 124(1)) from the charger (*e.g.,* charger 122(1), 122(2), ... 122(N)) including one or more sockets connected to the one or more vehicles (124(1)). The charger (*e.g.,* charger 122(1), 122(2), ... 122(N)) is supplied with electrical power from an electric switchboard for an apartment. Also, the integrated server system 502(1)) integrated with the charger (*e.g*., charger 122(1), 122(2), ... 122(N)).

At operation 904, the method 900 includes calculating, by the integrated server system (*e.g.* integrated server system 502(1)), the reserve power capacity for the apartment by comparing the total maximum power capacity of the apartment and the predicted required power for the apartment in the next predetermined time period of a day.

At operation 906, the method 900 includes calculating, by the integrated server system (*e.g.* integrated server system 502(1)), a charge plan based on the reserve power capacity and the consolidated energy demand of the one or more vehicles (*e.g.* vehicle 124(1)).

At operation 908, the method 900 includes calculating in real-time, by the integrated server system (*e.g.* the integrated server system 502(1)), the free power capacity by comparing the total maximum power capacity of the apartment and the consolidated power consumption of the apartment and the charger (*e.g*., charger 122(1), 122(2), ... 122(N)). The consolidated power consumption is received from an associated apartment meter. The integrated server system (*e.g.* the integrated server system 502(1)) dynamically adjusts in real-time, at least the charge plan based on the free power capacity and the consolidated energy demand of the one or more vehicles (*e.g.* vehicle 124(1)).

At operation 910, the method 900 includes controlling, by the integrated server system (*e.g.* the integrated server system 502(1)), the power delivered to the one or more vehicles (*e.g.* vehicle 124(1)), based upon the dynamically adjusted charge plan.

It should be noted that the present invention is not limited only to apartments and houses of the multi-unit dwelling 104, but is also used in supermarkets, malls, hospitals, company or corporate building complex, *etc.* In one embodiment of the invention, the multi-unit dwelling 104 can be the company or corporate building complex including one or more floors and one or more departments of the company or corporate. If the company or corporation has solar panels installed, the energy can only be harvested 4 hours a day between 10:00 am and 02:00 pm. If more energy is produced then, after company or corporate use, the excess energy can be used to charge the employee's electric vehicle via a charger available in the centralized charging station 106 of the company or corporate building complex, during working hours. The electric vehicle can be plugged into the charger in the morning when the employee arrives at the company, but the server system 108 tells the charger when loading is available based on available surplus energy. Based on the charge plan. Thus, the companies can offer charging capacities to employees as fringe benefits and help them to consume the excess solar energy generated in the company.

Thus, by using the present invention, the system dynamically calculates the charge plan for charging the electrical vehicles that are connected to the centralized charging station in the off-peak time, such that all the connected electrical vehicles are charged before 06:00 am the next day. This eliminates the overloading of the grid during peak time (daytime) as power requirements of the multi-unit dwellings and the demand for the electric vehicle will be high during such peak times.

Various embodiments of the disclosure, as discussed above, may be practiced with steps and/or operations in a different order, and/or with hardware elements in configurations, which are different from those which are disclosed. Therefore, although the disclosure has been described based on these exemplary embodiments, it is noted that certain modifications, variations, and alternative constructions may be apparent and well within the scope of the disclosure.

Although various exemplary embodiments of the disclosure are described herein in a language specific to structural features and/or methodological acts, the subject matter defined in the appended claims is not necessarily limited to the specific features or acts described above. Rather, the specific features and acts described above are disclosed as exemplary forms of implementing the claims.

## Claims

1. A method (600) for dynamically balancing energy demands of a plurality of electric vehicles (124) using a reserve power capacity of a multi-unit dwelling (104) connected to an electrical grid (102), the method (600) comprising:
receiving (602), by a server system (108), consolidated power consumption of the multi-unit dwelling (104) from a consolidated dwelling meter (120b) of the multi-unit dwelling (104);
receiving (604), by the server system (108), consolidated energy demand of the plurality of vehicles (124) from a plurality of chargers (122) connected to the plurality of vehicles (124), respectively;
calculating (606), by the server system (108), the reserve power capacity of the multi-unit dwelling (104) by comparing a total maximum power capacity of the multi-unit dwelling (104) and predicted required power in next predetermined time period of a day;
calculating (608), by the server system (108), a charge plan based on the reserve power capacity and the consolidated energy demand of the plurality of vehicles (124);
calculating (610) in real-time, by the server system (108), a free power capacity of the multi-unit dwelling (104) by comparing the total maximum power capacity of the multi-unit dwelling (104) and the consolidated power consumption of the multi-unit dwelling (104),
wherein the server system (108) dynamically adjusts (612) the charge plan based on the free power capacity of the multi-unit dwelling (104) and the consolidated energy demand of the plurality of vehicles (124); and
controlling (612), by the server system (108), power delivered to the plurality of chargers (122) based upon the charge plan.

2. The method (600) of claim 1 further comprising:
setting, by the server system (108), a start time to start charging of the plurality of vehicles (124) based on the charge plan, such that the plurality of vehicles (124) is charged within a first pre-determined time interval during a non-peak energy consumption period.

3. The method (600) of claim 1, further comprising:
reserving, by the server system (108), a pre-determined power buffer value in the free power capacity of the multi-unit dwelling (104); and
calculating, by the server system (108), the free power capacity of the multi-unit dwelling (104) by excluding the pre-determined power buffer value, wherein dynamically adjusting the at least the charge plan based on the free power capacity.

4. The method (600) of claim 3 further comprising:
setting, by the server system, a new start time to start charging of the plurality of vehicles (124) based on the charge plan, such that the plurality of vehicles (124) is charged within a second pre-determined time interval during a non-peak energy consumption period.

5. The method (600) of claim 1 further comprising:
predicting (702) in real-time, by the server system (108), power consumption in the next predetermined time period of the multi-unit dwelling (104) based on historical data of the power consumption of the multi-unit dwelling (104) on a same day of a penultimate year; and
calculating (704) in real-time, by the server system (108), power consumption due to at least one external factor,
wherein the predicted required power is calculated by adjusting the predicted energy consumption of the next predetermined time period of the multi-unit dwelling (104) on the same day of the penultimate year with the calculated power consumption in real-time due to at least one external factor.

6. The method (600) of claim 1 further comprising:
reporting, by the plurality of vehicles (124), individual energy demands for charging to the plurality of chargers (122), wherein the consolidated energy demand of the plurality of vehicles (124) is calculated from the individual energy demands;
reporting, by the plurality of chargers (122), the consolidated energy demand to the server system (108) and transporting to the plurality of chargers (122), the charge plan from the server system (108);
sending, by the plurality of chargers (122), the charge plan to the plurality of vehicles (124);
sending, by each of the plurality of vehicles (124), a charge request to the plurality of chargers (122); and
charging, by the plurality of chargers (122), each of the plurality of vehicles (124) based on the charge plan and the charge request.

7. The method (600) of claim 6, further comprising:
reporting, by a consolidated charger meter (128), to the server system (108), a charging status of the plurality of vehicles (124).

8. The method (600) of claim 1, wherein the total maximum power capacity of the multi-unit dwelling (104) comprises:
maximum power capacity of the multi-unit dwelling (104); and
an additional power capacity received from the electrical grid (102) for fulfilling the consolidated energy demand of the plurality of chargers (122).

9. A method (900) for dynamically balancing energy demands of a plurality of electric vehicles (124) using a reserve power capacity of a multi-unit dwelling (104) connected to an electrical grid (102), the method (900) comprising:
receiving (902), by an integrated server system (502(1)), consolidated energy demand of one or more vehicles (124(1)) from a charger (122(1)) comprising one or more sockets connected to the one or more vehicles (124(1)), the charger (122(1)) being supplied electrical power from an electric switchboard (112(1)) for an apartment, the integrated server system 502(1)) integrated with the charger (122(1));
calculating (904), by the integrated server system (502(1)), the reserve power capacity for the apartment by comparing a total maximum power capacity of the apartment and predicted required power for the apartment in next predetermined time period of a day;
calculating (906), by the integrated server system (502(1)), a charge plan based on the reserve power capacity and the consolidated energy demand of the one or more vehicles (124(1));
calculating (908) in real-time, by the integrated server system (502(1)), a free power capacity by comparing the total maximum power capacity of the apartment and consolidated power consumption of the apartment and the charger (122(1)), the consolidated power consumption received from an associated apartment meter, wherein the integrated server system (502(1)) dynamically adjusts (910) in real-time at least the charge plan based on the free power capacity and the consolidated energy demand of the one or more vehicles (124(1)); and
controlling (910), by the integrated server system (502(1)), power delivered to the one or more vehicles (124(1)), based upon the charge plan.

10. A system (100) for dynamically balancing energy demands of a plurality of electric vehicles (124) using a reserve power capacity of a multi-unit dwelling (104) connected to an electrical grid (102), the system comprising:
a consolidated dwelling meter (120b) configured to measure consolidated power consumption of the multi-unit dwelling (104); and
a server system (108) connected to the consolidated dwelling meter (120b) and a consolidated charger meter (128), the consolidated charger meter (128) configured to measure consolidated power consumption of a plurality of chargers (122) connected to the plurality of vehicles (124), the server system (108) configured, at least in part, to:
receive the consolidated power consumption of the multi-unit dwelling (104) from the consolidated dwelling meter (120b);
receive consolidated energy demand of the plurality of vehicles (124) from the plurality of chargers (122);
calculate the reserve power capacity for the multi-unit dwelling (104) by comparing a total maximum power capacity of the multi-unit dwelling (104) and predicted required power in next predetermined time period of a day;
calculate a charge plan based on the reserve power capacity and the consolidated energy demand of the plurality of vehicles (124);
calculate in real-time free power capacity of the multi-unit dwelling (104) by comparing the total maximum power capacity of the multi-unit dwelling (104) and the consolidated power consumption of the multi-unit dwelling (104),
wherein the charge plan is dynamically adjusted in real-time, based on a free power capacity of the multi-unit dwelling (104) and the consolidated energy demand of the plurality of vehicles (124); and
control power delivered to the plurality of chargers (122) based on the charge plan.

11. The system (100) as claimed in claim 10, wherein the server system (108) is further configured, at least in part, to set a start time to start charging of the plurality of vehicles (124) based on the charge plan, such that the plurality of vehicles (124) is charged within a first pre-determined time interval during a non-peak energy consumption period.

12. The system (100) as claimed in claim 10, wherein the server system (108) is further configured, at least in part, to:
reserve a pre-determined power buffer value in the free power capacity of the multi-unit dwelling (104); and
calculate the free power capacity of the multi-unit dwelling (104) by excluding the pre-determined power buffer value, wherein dynamically adjusting the at least the charge plan based on the free power capacity.

13. The system (100) as claimed in claim 12, wherein the server system (108) is further configured, at least in part, to set a new start time to start charging the plurality of vehicles (124) based on the charge plan, such that the plurality of vehicles (124) is charged within a second pre-determined time interval during a non-peak energy consumption period.

14. The system (100) as claimed in claim 10, wherein the server system (108) is further configured, at least in part, to:
predict in real-time power consumption in the next predetermined time period of the multi-unit dwelling (104) based on historical data of the power consumption of the multi-unit dwelling (104) on a same day of a penultimate year; and
calculate the power consumption due to at least one external factor,
wherein the server system (108) is further configured to calculate the predicted required power by adjusting the predicted energy consumption of the next predetermined time period of the multi-unit dwelling (104) on the same day of the penultimate year with the calculated power consumption in real-time due to at least one external factor.

15. A system (500) for dynamically balancing energy demands of a plurality of electric vehicles (124) using a reserve power capacity of a multi-unit dwelling (104) connected to an electrical grid (102), comprising:
a plurality of chargers (122) electrically connected to an electric switchboard (112(1)) of an apartment for drawing electrical power from the electric switchboard (112(1)), each of the plurality of chargers (122) comprising one or more sockets;
one or more electric vehicles (124(1)) connected to the one or more sockets; and
an integrated server system (502(1)) integrated with at least one of the plurality of chargers (122);
wherein the integrated server system (502(1)) is configured to:
receive consolidated energy demand of the one or more vehicles (124(1)) from the charger ((122(1)));
calculate the reserve power capacity for the apartment by comparing a total maximum power capacity of the apartment and predicted required power for the apartment in next predetermined time period of a day;
calculate a charge plan based on the reserve power capacity and the consolidated energy demand of the one or more vehicles (124(1));
calculate, in real-time, a free power capacity by comparing the total maximum power capacity of the apartment and consolidated power consumption of the apartment and the charger (122(1)), the consolidated power consumption received from an associated apartment meter,
wherein the charge plan is dynamically adjusted in real time based on the free power capacity and the consolidated energy demand of the one or more vehicles (124(1)); and
control power delivered to the one or more vehicles (124(1)), based upon the charge plan.
